# EUROPEAN PATENT APPLICATION

(11) **EP 4 712 155 A1**
(43) Date of publication of application: **18.03.2026**
(21) Application number: 25195163.8
(22) Date of filing: 11.08.2025
(51) Int. Cl.: H01M 4/13, H01M 10/052, H01M 50/572, H01M 4/36

(54) **ELECTRODE AND SECONDARY BATTERY**

(30) Priority: 11.09.2024 KR 20240124172
(71) Applicant: SAMSUNG SDI CO., LTD., Yongin-si, Gyeonggi-do 17084 (KR)
(72) Inventor: MOON, Sang Hyup, Suwon-si 16678 (KR); KIM, Sung Su, Suwon-si 16678 (KR)
(74) Representative: Maiwald GmbH

(57) **Abstract**

An electrode and a secondary battery are disclosed. An electrode includes a substrate, and a coating layer including a first coating layer coated on a side of the substrate in a first direction, and a second coating layer coated on another side of the substrate in a second direction, and the coating layer includes a first layer and a second layer located on the first layer and defining a step with the first layer.

## Description

### BACKGROUND

### 1. Field

Aspects of embodiments of the present disclosure relate to an electrode and a secondary battery.

### 2. Description of the Related Art

Secondary batteries are batteries that can be charged and discharged, unlike primary batteries that cannot be recharged. Low-capacity secondary batteries may be used in small portable electronic devices, such as smartphones, feature phones, laptop computers, digital cameras, and camcorders, and high-capacity secondary batteries are widely used as motor driving power sources, power storage batteries, and the like in hybrid vehicles, electric vehicles, and the like, for example. These secondary batteries include electrode(s) including a positive electrode and/or a negative electrode, an electrode assembly including the electrode(s), a case which accommodates the electrode assembly, and an electrode terminal connected to the electrode assembly.

As technology advances, high-capacity secondary batteries are desired. Accordingly, a plurality of secondary batteries can be used by being electrically connected. For example, the secondary batteries can be applied to electronic devices in the form of a secondary battery module including a plurality of secondary batteries and/or a secondary battery pack including a plurality of secondary battery modules. In this case, the electronic devices are electronic devices requiring high output and/or high capacity and include, for example, electric vehicles and the like.

The electrode includes a substrate and a coating layer formed on the substrate. Generally, the coating layer is formed as a single layer.

However, as technology advances, high-capacity secondary batteries are desired. Accordingly, a thickness of the coating layer in the electrode is to be thicker. However, if the coating layer is formed as a single layer, there may be a problem in that coating of the coating layer is difficult and/or the electrode is unevenly manufactured.

The above-described information disclosed in the background technology of the present disclosure is provided for improving understanding of the background of the present disclosure, and, accordingly, may include information that does not constitute the related art.

### SUMMARY

According to an aspect of one or more embodiments of the present disclosure, an electrode formed with a coating layer including two or more layers and/or a secondary battery are provided.

According to another aspect of one or more embodiments of the present disclosure, an electrode formed with a coating layer in which rising portions of two or more layers do not overlap and/or a secondary battery are provided.

According to another aspect of one or more embodiments of the present disclosure, an electrode formed with a coating layer in which dragging or descending portions of two or more layers do not overlap and/or a secondary battery are provided.

According to another aspect of one or more embodiments of the present disclosure, an electrode with improved electrode plate resistance, and/or a secondary battery are provided.

However, aspects and technical problems to be solved by the present disclosure are not limited to the above-described aspects and problems to be solved, and other aspects and problems to be solved which are not mentioned, will be clearly understood by those skilled in the art from the description of the invention disclosed below.

According to one or more embodiments, an electrode includes a substrate; and a coating layer including a first coating layer coated on a side of the substrate in a first direction, and a second coating layer coated on another side of the substrate in a second direction, wherein the coating layer includes a first layer and a second layer located on the first layer and defining a step with the first layer.

According to one or more embodiments, a secondary battery includes an electrode assembly including stacked electrodes and a separator; and a case accommodating the electrode assembly, wherein the electrode includes a substrate and a coating layer including a first coating layer coated on a side of the substrate in a first direction, and a second coating layer coated on another side of the substrate in a second direction, and the coating layer includes a first layer and a second layer located on the first layer and defining a step with the first layer.

### BRIEF DESCRIPTION OF THE DRAWINGS

The following drawings included with this specification illustrate some embodiments of the present invention and, together with the detailed description of the invention to be described below, are provided for understanding of the technical ideas of the present invention; however, the present invention is not to be construed as being limited to matters described in such drawings, in which:
FIGS.1 to 4 are views schematically showing a secondary battery according to some embodiments of the present disclosure;
FIG. 5 is a view schematically showing a coating device according to an embodiment of the present disclosure;
FIG. 6 is a view schematically showing an electrode;
FIG. 7 is a view schematically showing an electrode according to an embodiment of the present disclosure;
FIG. 8 is a view schematically showing an electrode according to an embodiment of the present disclosure;
FIG. 9 is a view schematically showing an electrode according to an embodiment of the present disclosure;
FIG. 10 is a view schematically showing a first electrode and a second electrode according to an embodiment of the present disclosure; and
FIG. 11 is a view schematically showing an electrode according to an embodiment of the present disclosure shown according to FIG. 10.

### DETAILED DESCRIPTION

Herein, some embodiments of the present disclosure will be described in further detail. However, these embodiments are presented as examples and are not intended to limit the present disclosure, and the present disclosure is defined by the scope of the claims.

Unless otherwise specifically mentioned in the present specification, a case in which a part such as a layer, a film, a region, a plate, or the like is "on" another part includes not only a case in which the part is "directly on" another part, but also a case in which there is another part therebetween.

Unless otherwise specifically mentioned in the present specification, a singular form may also include a plural form. In addition, unless otherwise specifically mentioned, "A or B" may mean "including A, including B, or including A and B."

In the present specification, "a combination thereof" may mean any of a mixture, a laminate, a compound, a copolymer, an alloy, a blend, and a reaction product of compositions.

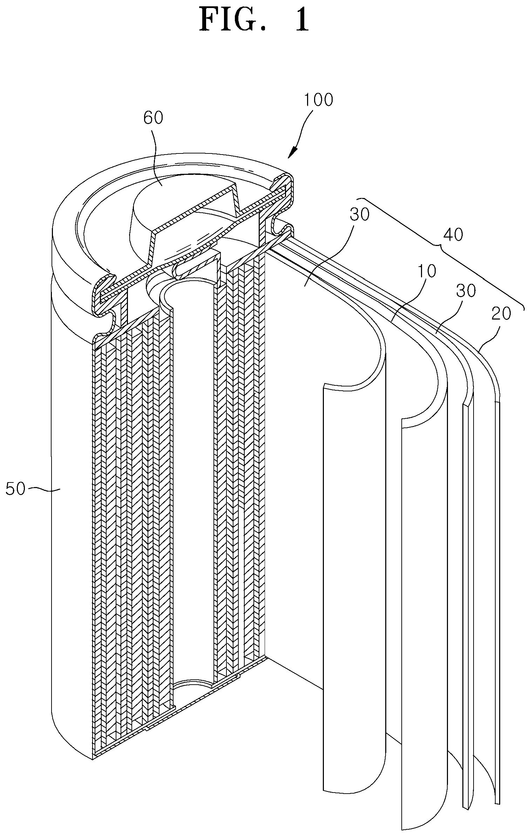

FIGS.1 to 4 are views schematically showing a battery cell according to some embodiments of the present disclosure.

### Secondary battery 100

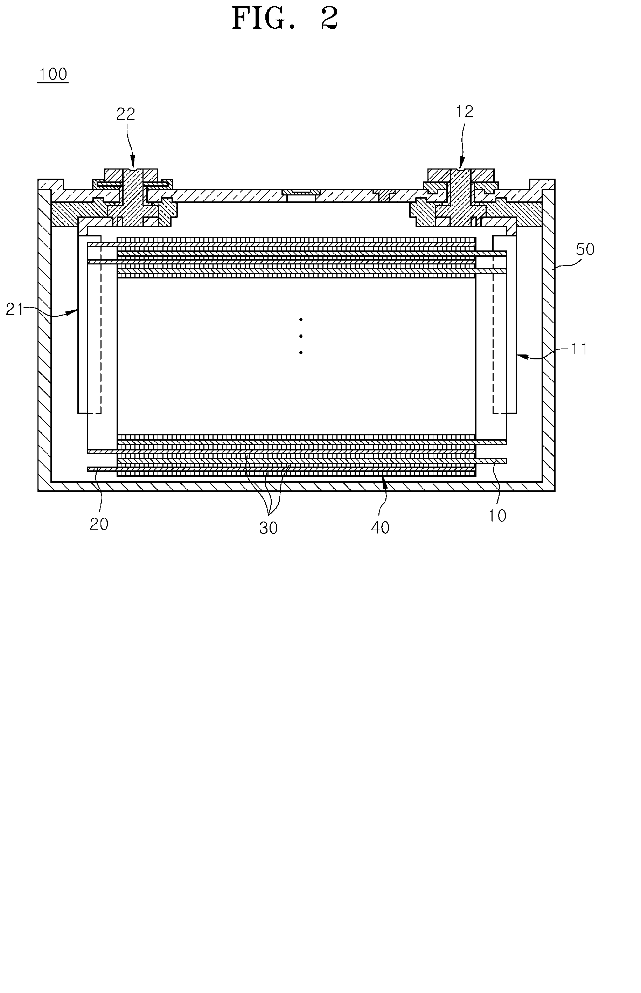

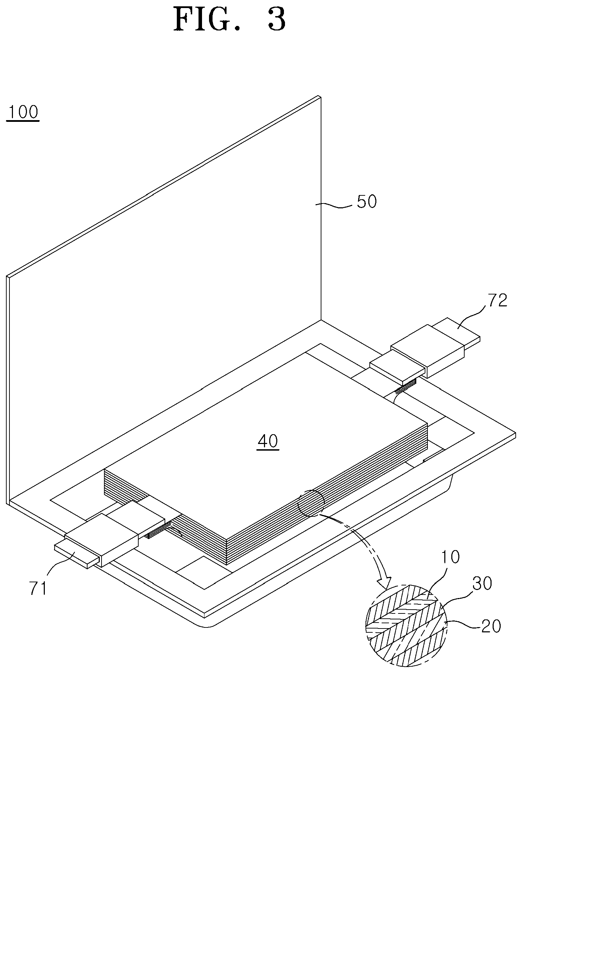

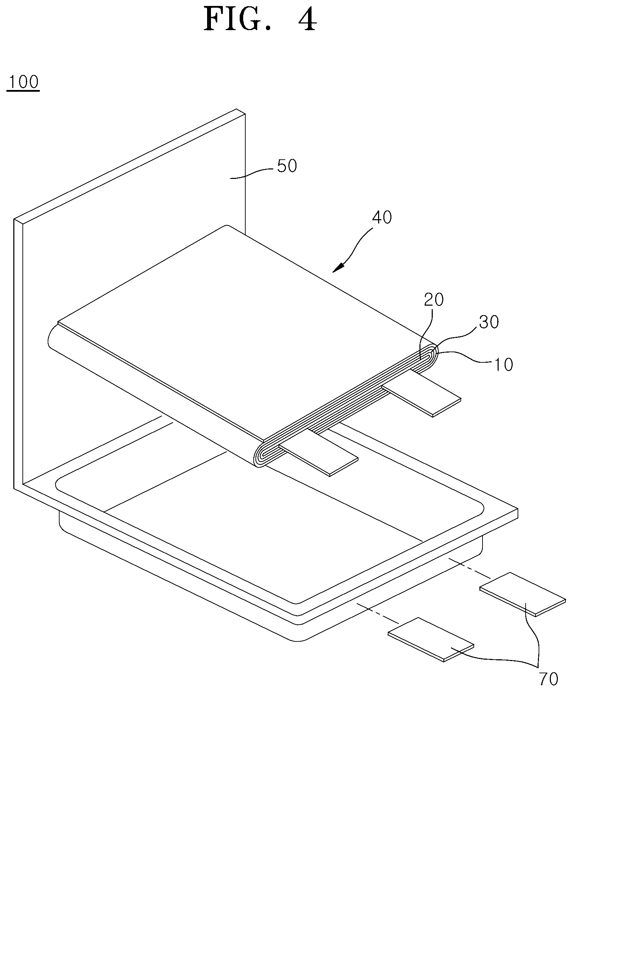

The secondary battery 100 may be classified into a cylindrical type, a prismatic type, a pouch type, a coin type, or the like according to a shape thereof. FIGS. 1 to 4 are schematic views showing secondary batteries according to some embodiments, where FIG. 1 shows a cylindrical battery, FIG. 2 shows a prismatic battery, and FIGS. 3 and 4 show a pouch-type battery. Referring to FIGS. 1 to 4, the secondary battery 100 may include an electrode assembly 40 in which a separator 30 is interposed between a positive electrode 10 and a negative electrode 20, and a case 50 in which the electrode assembly 40 is accommodated. The positive electrode 10, the negative electrode 20, and the separator 30 may be impregnated with an electrolyte (not shown). As shown in FIG. 1, the secondary battery 100 may include a sealing member 60 which seals the case 50. Further, in FIG. 2, the secondary battery 100 may include a positive electrode lead tab 11, a positive electrode terminal 12, a negative electrode lead tab 21, and a negative electrode terminal 22. As shown in FIGS. 3 and 4, the secondary battery 100 may include electrode tabs 70, that is, a positive electrode tab 71 and a negative electrode tab 72, which function as an electrical path to guide a current generated in the electrode assembly 40 to the outside.

### Positive electrode active material

A compound capable of reversibly intercalating and deintercalating lithium (a lithiated intercalation compound) may be used as the positive electrode active material. In an embodiment, one or more types of a composite oxide of lithium and a metal selected from cobalt, manganese, nickel, and a combination thereof may be used.

In an embodiment, the composite oxide may be a lithium transition metal composite oxide, and examples of the composite oxide may include lithium nickel-based oxide, lithium cobalt-based oxide, lithium manganese-based oxide, lithium iron phosphate-based compound, cobalt-free nickel-manganese-based oxide, or a combination thereof.

For example, a compound represented by any of the chemical formulas below may be used: LiₐA_{1-b}X_{b}O_{2-c}D_{c} (0.90≤a≤1.8, 0≤b≤0.5, 0≤c≤0.05), LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCOG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fₑ₂(PO₄)₃ (0≤f≤2); and LiₐFePO₄ (0.90≤a≤1.8).

In the above chemical formulas, A is Ni, Co, Mn, or a combination thereof, X is Al, Ni, Co, Mn, Cr, Fe, Mg, Sr, V, a rare earth element, or a combination thereof, D is O, F, S, P, or a combination thereof, G is Al, Cr, Mn, Fe, Mg, La, Ce, Sr, V, or a combination thereof, and L¹ is Mn, Al, or a combination thereof.

For example, the positive electrode active material may be a high nickel-based positive electrode active material having a nickel content of 80 mol% or more, 85 mol% or more, 90 mol% or more, 91 mol% or more, or 94 mol% or more and 99 mol% or less based on 100 mol% of metals excluding lithium in the lithium transition metal composite oxide. The high nickel-based positive electrode active material may implement high capacity, and thus may be applied to high capacity, high density secondary batteries.

### Positive electrode 10

The positive electrode 10 for the secondary battery 100 may include a current collector and a positive electrode active material layer formed on the current collector. The positive electrode active material layer may include a positive electrode active material and may further include a binder and/or a conductive material.

For example, the positive electrode may further include an additive capable of functioning as a sacrificial positive electrode.

In an embodiment, a content of the positive electrode active material may be 90% to 99.5% by weight based on 100% by weight of the positive electrode active material layer, and a content of the binder and the conductive material may each be 0.5% to 5% by weight based on 100% by weight of the positive electrode active material layer.

The binder may attach particles constituting the positive electrode active material to each other well, and also attach the positive electrode active material to the current collector well. Representative examples of the binder may include polyvinyl alcohol, carboxymethylcellulose, hydroxypropylcellulose, diacetylcellulose, polyvinyl chloride, carboxylated polyvinyl chloride, polyvinyl fluoride, polymers containing ethylene oxide, polyvinylpyrrolidone, polyurethane, polytetrafluoroethylene, polyvinylidene fluoride, polyethylene, polypropylene, styrene-butadiene rubber, (meth)acrylated styrene-butadiene rubber, an epoxy resin, a (meth)acrylic resin, a polyester resin, nylon, and the like, but are not limited thereto.

The conductive material imparts conductivity to the electrode, and any suitable material which does not cause a chemical change and is electrically conductive may be used. Examples of the conductive material may include a carbon-based material, such as natural graphite, artificial graphite, carbon black, acetylene black, Ketjen black, carbon fibers, carbon nanofibers, carbon nanotubes, or the like, a metal-based material in the form of metal powder or metal fibers containing copper, nickel, aluminum, silver, or the like, a conductive polymer, such as a polyphenylene derivative or the like, or a mixture thereof.

In an embodiment, Al may be used as the current collector, but the current collector is not limited thereto.

### Negative electrode active material

The negative electrode active material includes a material capable of reversibly intercalating and deintercalating lithium ions, lithium metal, an alloy of lithium and a metal, a material capable of doping and dedoping lithium, or a transition metal oxide.

The material capable of reversibly intercalating and deintercalating lithium ions may include a carbon-based negative electrode active material, for example, crystalline carbon, amorphous carbon, or a combination thereof. Examples of the crystalline carbon may include graphite such as amorphous, plate-shaped, flaky, spherical, or fibrous natural graphite or artificial graphite, and examples of the amorphous carbon may include soft carbon or hard carbon, mesophase pitch carbide, calcined coke, or the like.

An alloy of lithium and a metal selected from Na, K, Rb, Cs, Fr, Be, Mg, Ca, Sr, Si, Sb, Pb, In, Zn, Ba, Ra, Ge, Al, and Sn may be used as the alloy of lithium and a metal.

In an embodiment, a Si-based negative electrode active material or a Sn-based negative electrode active material may be used as the material capable of doping and dedoping lithium. The Si-based negative electrode active material may include silicon, a silicon-carbon composite, SiOₓ (0 < x ≤ 2), an Si-Q alloy (Q is selected from an alkali metal, an alkaline earth metal, a Group 13 element, a Group 14 element (excluding Si), a Group 15 element, a Group 16 element, a transition metal, a rare earth element, and a combination thereof), or a combination thereof. The Sn-based negative electrode active material may be Sn, SnO₂, a Sn-based alloy, or a combination thereof.

The silicon-carbon composite may be a composite of silicon and amorphous carbon. According to an embodiment, the silicon-carbon composite may be in the form of silicon particles of which surfaces are coated with amorphous carbon. For example, the silicon-carbon composite may include a secondary particle (a core) in which silicon primary particles are assembled, and an amorphous carbon coating layer (a shell) located on the surface of the secondary particle. The amorphous carbon may also be located between the silicon primary particles, and, for example, the silicon primary particles may be coated with amorphous carbon. The secondary particles may be dispersed in an amorphous carbon matrix.

The silicon-carbon composite may further include crystalline carbon. For example, the silicon-carbon composite may include a core containing crystalline carbon and silicon particles, and an amorphous carbon coating layer located on the surface of the core.

The Si-based negative electrode active material or the Sn-based negative electrode active material may be used in combination with the carbon-based negative electrode active material.

### Negative electrode 20

The negative electrode 20 for the secondary battery 100 may include a current collector and a negative electrode active material layer located on the current collector. The negative electrode active material layer may include a negative electrode active material and may further include a binder and/or a conductive material.

In an embodiment, for example, the negative electrode active material layer may include the negative electrode active material in an amount of 90% to 99.5% by weight, the binder in an amount of 0.5% to 5% by weight, and the conductive material in an amount of 0% to 5% by weight.

The binder may attach particles constituting the negative electrode active material to each other well, and also attach the negative electrode active material to the current collector well. The binder may be a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, a fluoroelastomer, polyethylene oxide, polyvinylpyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acrylic resin, a phenol resin, an epoxy resin, polyvinyl alcohol, and a combination thereof.

If the aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, and alkali metal salts thereof may be used in combination. In an embodiment, Na, K, or Li may be used as the alkali metal.

The dry binder is a polymer material which may be fiberized and may be, for example, polytetrafluoroethylene, polyvinylidene fluoride, a polyvinylidene fluoridehexafluoropropylene copolymer, polyethylene oxide, or a combination thereof.

The conductive material imparts conductivity to the electrode, and any suitable material which does not cause a chemical change and is electrically conductive may be used. Examples of the conductive material may include a carbon-based material, such as natural graphite, artificial graphite, carbon black, acetylene black, Ketjen black, carbon fibers, carbon nanofibers, carbon nanotubes, or the like, a metal-based material in the form of metal powder or metal fibers containing copper, nickel, aluminum, silver, or the like, a conductive polymer, such as a polyphenylene derivative or the like, or a mixture thereof.

The negative electrode current collector may be selected from copper foil, nickel foil, stainless steel foil, titanium foil, nickel foam, copper foam, a polymer substrate coated with a conductive metal, and a combination thereof.

### Electrolyte (not shown)

The electrolyte for the secondary battery 100 includes a non-aqueous organic solvent and a lithium salt.

The non-aqueous organic solvent functions as a medium through which ions involved in an electrochemical reaction of the battery may move.

In an embodiment, the non-aqueous organic solvent may be a carbonate-based solvent, an ester-based solvent, an ether-based solvent, a ketone-based solvent, an alcohol-based solvent, an aprotic solvent, or a combination thereof.

As the carbonate-based solvent, dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), butylene carbonate (BC), or the like may be used.

As the ester-based solvent, methyl acetate, ethyl acetate, n-propyl acetate, dimethyl acetate, methyl propionate, ethyl propionate, decanolide, mevalonolactone, valerolactone, caprolactone, or the like may be used.

As the ether-based solvent, dibutyl ether, tetraglyme, diglyme, dimethoxyethane, 2-methyltetrahydrofuran, 2,5-dimethyltetrahydrofuran, tetrahydrofuran, tetrahydrofuran, or the like may be used. Further, as the ketone-based solvent, cyclohexanone may be used. As the alcohol-based solvent, ethyl alcohol, isopropyl alcohol, or the like may be used, and, as the aprotic solvent, nitriles such as R-CN (R is a linear, branched, or cyclic hydrocarbon group having 2 to 20 carbon atoms and may include double bonds, an aromatic ring, or an ether group) and the like, amides such as dimethylformamide and the like, dioxolanes such as 1,3-dioxolane, 1,4-dioxolane, and the like, sulfolanes, and the like may be used.

The non-aqueous organic solvent may be used alone or in a mixture of two or more.

Further, if the carbonate-based solvent is used, a mixture of a cyclic carbonate and a chain carbonate may be used, and the cyclic carbonate and the chain carbonate may be mixed in a volume ratio of 1:1 to 1:9.

The lithium salt is a material which dissolves in an organic solvent and functions as a source of lithium ions in the battery to enable the basic operation of a secondary battery and promote the movement of lithium ions between the positive electrode and the negative electrode. Representative examples of the lithium salts may include one or more selected from LiPF₆, LiBF₄, LiSbF₆, LiAsF₆, LiClO₄, LiAlO₂, LiAlCl₄, LiPO₂F₂, LiCl, Lil, LiN(SO₃C₂F₂)₂, Li(FSO₂)₂N (lithium bis(fluorosulfonyl)imide (LiFSI), LiC₄F₉SO₃, LiN(CₓF₂ₓ₊₁SO₂)(C_{y}F_{2y+1}SO₂) (x and y are integers from 1 to 20), lithium trifluoromethane sulfonate, lithium tetrafluoroethanesulfonate, lithium difluorobis(oxalato)phosphate (LiDFOB), and lithium bis(oxalato)borate (LiBOB).

### Separator 30

The separator 30 may be present between the positive electrode 10 and the negative electrode 20 depending on the type of secondary battery 100. As the separator 30, polyethylene, polypropylene, polyvinylidene fluoride, or a multilayer film of two or more layers thereof may be used, and a mixed multilayer film such as a polyethylene/polypropylene two-layer separator, a polyethylene/polypropylene/polyethylene three-layer separator, a polypropylene/polyethylene/polypropylene three-layer separator, or the like may be used.

The separator 30 may include a porous substrate and a coating layer containing an organic material, an inorganic material, or a combination thereof located on one side or both, or opposite, sides of the porous substrate.

The porous substrate may be a polymer film formed of a polymer selected from polyolefins, such as polyethylene and polypropylene, polyesters, such as polyethylene terephthalate and polybutylene terephthalate, polyacetal, polyamide, polyimide, polycarbonate, polyetherketone, polyaryletherketone, polyetherimide, polyamideimide, polybenzimidazole, polyether sulfone, polyphenylene oxide, a cyclic olefin copolymer, polyphenylene sulfide, polyethylene naphthalate, glass fibers, and polytetrafluoroethylene (e.g., Teflon), or a copolymer or mixture of two or more thereof.

The organic material may include a polyvinylidene fluoride-based polymer or a (meth)acrylic-based polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto.

The organic material and the inorganic material may be present as a mixture in one coating layer, or present in a form in which a coating layer containing an organic material and a coating layer containing an inorganic material are stacked.

As described above, the secondary battery 100 according to an embodiment of the present disclosure may include the electrode assembly 40 and the case 50 which accommodates the electrode assembly 40. Further, the electrode assembly 40 is formed by stacking electrodes (for example, including the positive electrode 10 and/or the negative electrode 20) and the separator (for example, including the separator 30).

Herein, a method by which the electrode may be formed as a thick film electrode will be described in further detail.

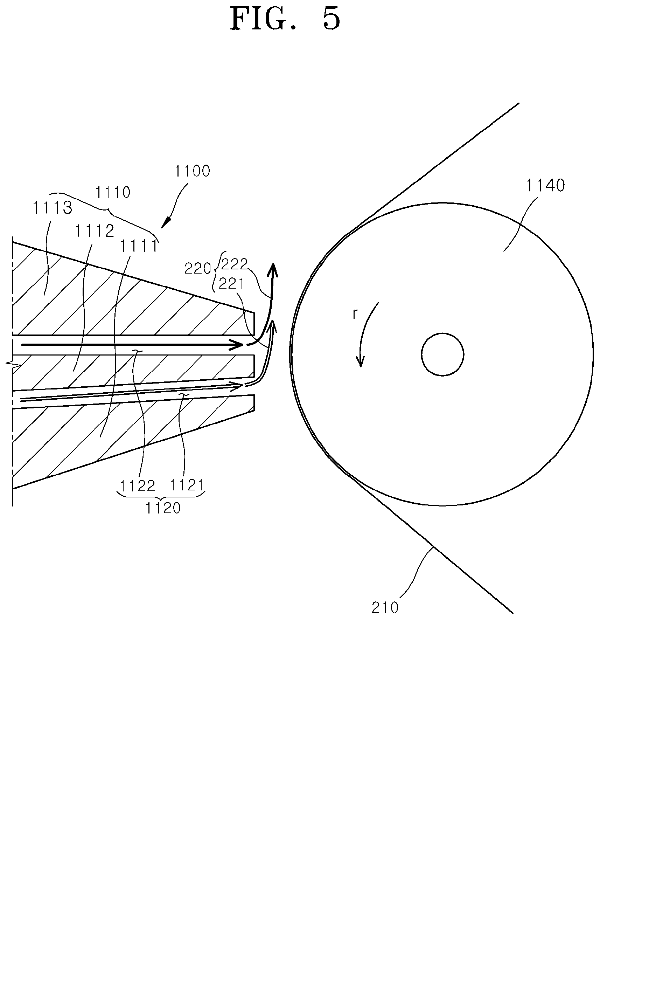

FIG. 5 is a view schematically showing a coating device according to an embodiment of the present disclosure.

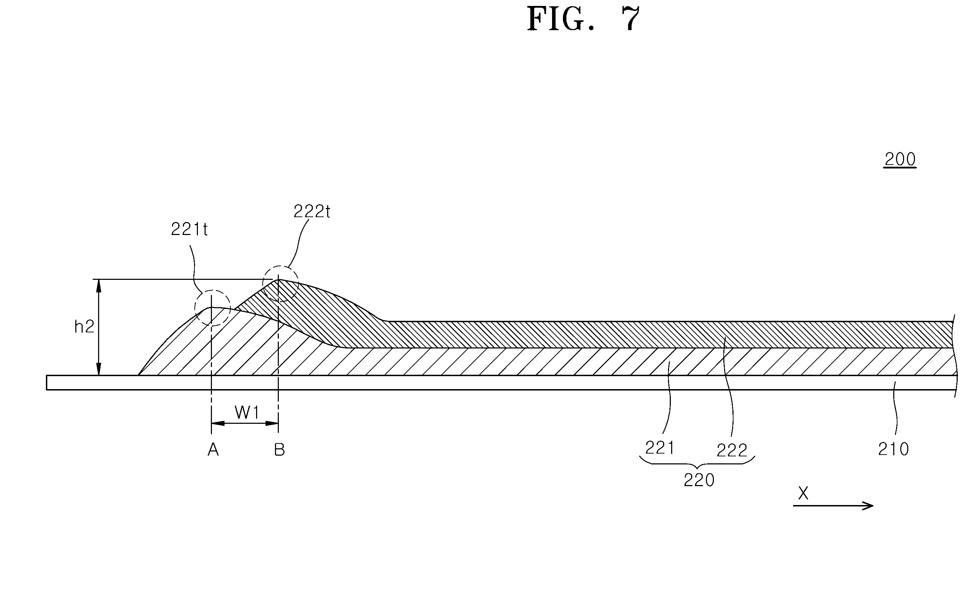

In FIG. 5, 1100 represents a coating device according to an embodiment of the present disclosure. The coating device 1100 manufactures an electrode 200 (see FIG. 7) by coating a substrate 210 with a coating layer 220.

In an embodiment, the electrode 200 includes, for example, the positive electrode 10 and/or the negative electrode 20 described with respect to FIGS. 1 to 4.

The substrate 210 may include the current collectors described with respect to FIGS. 1 to 4. For example, if the electrode 200 is a positive electrode, the substrate 210 is a positive electrode current collector. In an embodiment, for example, the positive electrode current collector includes aluminum (Al). For example, if the electrode is a negative electrode, the substrate 210 is a negative electrode current collector. In an embodiment, for example, the negative electrode current collector includes copper (Cu).

The coating layer 220 is formed by being applied on one or both, or opposite, sides of the substrate 210. The coating layer 220 includes, for example, the active material, the binder, and the conductive material described with respect to FIGS. 1 to 4. The coating layer 220 includes, for example, an active material layer.

The coating device 1100 includes a roller 1140 which transfers the substrate 210 and a discharge port 1120 which discharges a slurry on the substrate 210 to form the coating layer 220.

The roller 1140 is disposed in front of the discharge port 1120. For example, the roller 1140 is disposed on a side where the slurry is discharged from the discharge port 1120. The roller 1140 transfers the substrate 210 while rotating. For example, the roller 1140 may transfer the substrate 210 to the front of the discharge port 1120 while rotating counterclockwise (r). However, unlike as shown in FIG. 5, for example, the roller 1140 may transfer the substrate 210 to the front of the discharge port 1120 while rotating clockwise.

The discharge port 1120 discharges the slurry on the substrate 210 transferred by the roller 1140. In an embodiment, for example, the coating device 1100 further includes a manifold (not shown) that receives the coating layer 220. The manifold allows the slurry accommodated therein to be supplied toward the discharge port 1120. The discharge port 1120 discharges the slurry supplied from the manifold on the substrate 210.

For example, the discharge port 1120 discharges the slurry on the substrate 210 disposed in front of the discharge port 1120. For example, at a point where the slurry is discharged on the substrate 210, a direction in which the slurry is discharged and a direction in which the substrate 210 is transferred may be perpendicular to each other. For example, at the point where the slurry is discharged on the substrate 210, an angle between the direction in which the slurry is discharged and the direction in which the substrate 210 is transferred may be 90°±10°.

The discharge port 1120 may form the coating layer 220 which is formed to be thick on the substrate 210. For example, the discharge port 1120 may form the thick coating layer 220 on the substrate 210 by forming the coating layer 220 including two or more layers (for example, including 221 and 222) on the substrate 210.

To this end, the discharge port 1120 includes a first discharge port 1121 and a second discharge port 1122.

In an embodiment, for example, the coating device 1100 includes a plurality of die blocks 1110. For example, the coating device 1100 includes the die blocks 1110 in a number exceeding the number of discharge ports 1120. For example, if the coating device 1100 includes n discharge ports 1120, the coating device 1100 may include n+1 die blocks 1110. In this case, n is an integer greater than or equal to 2.

The plurality of die blocks 1110 include, for example, a first die block 1111, a second die block 1112, and a third die block 1113.

The first die block 1111 and the second die block 1112 are located adjacent to each other. The first die block 1111 and the second die block 1112 may be formed spaced apart from each other. For example, the second die block 1112 is provided spaced apart from the first die block 1111 at an upper side of the first die block 1111. Thus, a first discharge port 1121 may be formed by a space between the first die block 1111 and the second die block 1112.

The second die block 1112 and the third die block 1113 are located adjacent to each other. In this case, the second die block 1112 and the third die block 1113 may be formed spaced apart from each other. For example, the third die block 1113 is provided spaced apart from the second die block 1112 at an upper side of the second die block 1112. Thus, a second discharge port 1122 may be formed by a space between the second die block 1112 and the third die block 1113.

Further, with this structure, the second discharge port 1122 may be provided spaced apart from the first discharge port 1121 by a thickness of the second die block 1112. The second discharge port 1122 may be provided spaced apart from the first discharge port 1121 in a height direction.

In an embodiment, the first discharge port 1121 and the second discharge port 1122 may be formed at an angle to each other. For example, the second discharge port 1122 may be formed to have an inclination with respect to the first discharge port 1121. Accordingly, the discharge port 1120 may prevent or substantially prevent the coating layer 220 from flowing down from the substrate 210.

The first discharge port 1121 discharges a first slurry on the substrate 210. For example, the first discharge port 1121 discharges the first slurry accommodated in a first manifold (not shown) connected to the first discharge port 1121 on the substrate 210. The first slurry is discharged on the substrate 210 to form a first layer 221.

The second discharge port 1122 discharges a second slurry on the substrate 210. In an embodiment, the second slurry may be the same as the first slurry. However, the second slurry may be different from the first slurry. For example, the second discharge port 1122 discharges the second slurry accommodated in a second manifold (not shown) connected to the second discharge port 1122 on the substrate 210.

In this case, the second discharge port 1122 may discharge the second slurry on the first slurry discharged on the substrate 210. In an embodiment, the second discharge port 1122 may be located adjacent to the first discharge port 1121 but may be located behind the first discharge port 1121. The second slurry is discharged on the first layer 221 to form a second layer 222.

In an embodiment, for example, the roller 1140 is located in front of the discharge port 1120. In an embodiment, the first discharge port 1121 and the second discharge port 1122 may be disposed at different heights to sequentially discharge the coating layer 220 on the substrate 210 transferred by the roller 1140.

For example, if the roller 1140 rotates counterclockwise (r), the first discharge port 1121 may be located at a relatively lower side, and the second discharge port 1122 may be located at a relatively upper side. However, unlike as shown in FIG. 5, for example, if the roller 1140 rotates clockwise, the first discharge port 1121 may be located at the relatively upper side, and the second discharge port 1122 may be located at the relatively lower side. With this structure, the second discharge port 1122 may apply the second slurry after the first discharge port 1121 applies the first slurry on the substrate 210.

However, the components of the coating device 1100 shown in FIG. 5 are provided as examples, and components included in the coating device 1100 according to embodiments of the present disclosure are not limited thereto. For example, the discharge port 1120 may include two or more discharge ports, and, for example, may include three discharge ports. Accordingly, the coating device 1100 may manufacture an electrode 200 in the form of a thick film.

The coating device 1100 according to an embodiment of the present disclosure may form an electrode 200 including an active material layer formed as a thick film through this configuration. Further, the coating device 1100 may manufacture high-capacity secondary batteries 100.

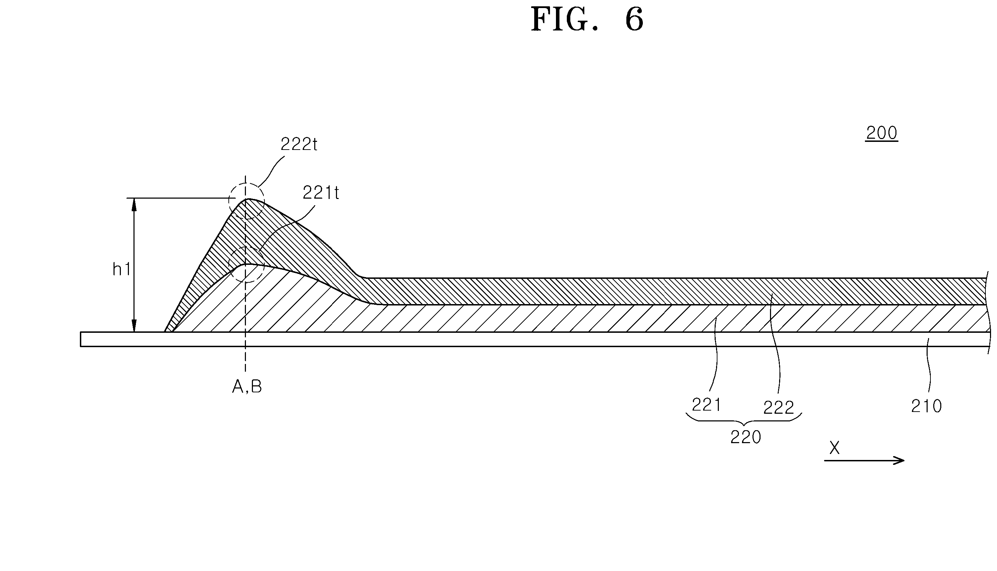

FIG. 6 is a view schematically showing an electrode.

In FIG. 6, 200 represents an electrode manufactured by the coating device 1100. As described in FIG. 5, the electrode 200 includes the substrate 210 and the coating layer 220 formed on the substrate 210. Further, the coating layer 220 may include the first layer 221 and the second layer 222.

The coating layer 220 is, for example, coated on the substrate 210 in a first direction (X). That is, the coating layer 220 is formed by coating the slurry in the first direction (X) from a point where coating starts to a point where coating is terminated.

The coating layer 220 may be formed with a rising portion at the point where coating starts. For example, the slurry may be excessively discharged from the discharge port 1120 when it starts to be discharged from the coating device 1100. Accordingly, the coating layer 220 may be formed with a rising portion in which the coating layer 220 is formed higher than an originally intended height of the coating layer 220 at the point where coating starts.

In this case, the coating layer 220 includes a plurality of layers (for example, including 221 and 222). Accordingly, each of the plurality of layers (for example, including 221 and 222) may be formed with a rising portion. For example, the first layer 221 may be formed with a rising portion 221t at the point where coating starts as the first slurry is excessively discharged from the first discharge port 1121. For example, the second layer 222 may be formed with a rising portion 222t at the point where coating starts as the second slurry is excessively discharged from the second discharge port 1122.

In this case, the rising portions may overlap when the plurality of layers (for example, including 221 and 222) have the same point where coating starts. For example, the first layer 221 and the second layer 222 may be formed at the same point on the substrate 210. In this case, the rising portion 222t of the second layer may be formed on the rising portion 221t of the first layer. Accordingly, the rising portion 221t of the first layer and the rising portion 222t of the second layer may be formed in an overlapping manner.

When the plurality of layers (for example, including 221 and 222) overlap and, thus, the rising portions (for example, including 221t and 222t) are formed, a height of the coating layer 220 at the point where coating starts may be excessively high.

In this case, there may be a problem in that the electrode 200 may be unevenly formed. However, in order to manufacture a high-capacity electrode 200 and/or secondary battery 100, a coating layer 220 including a plurality of layers is desired. Accordingly, herein, a method of providing an electrode 200 including a coating layer 220 which is relatively evenly (e.g., evenly or substantially evenly) formed while including a plurality of layers will be described.

FIG. 7 is a view schematically showing an electrode according to an embodiment of the present disclosure.

In FIG. 7, 200 represents an electrode according to an embodiment of the present disclosure. The electrode 200 may be, for example, manufactured by the coating device 1100 described in FIG. 5.

The electrode 200 includes a substrate 210, and a coating layer 220 formed on at least one side of the substrate 210, and the coating layer 220 includes a first layer 221 and a second layer 222 located on the first layer 221 and forming, or defining, a step with the first layer 221.

The coating layer 220 is, for example, coated on the substrate 210 in the first direction (X). The first direction (X) is, for example, a direction parallel to a longitudinal direction of the substrate 210. The coating layer 220 is formed by coating a slurry on the substrate 210 along the first direction (X) from the point where coating starts.

In the first direction (X), the first layer 221 is formed longer than the second layer 222. That is, the coating layer 220 may be formed by narrowing gradually or stepwise from a lower side in contact with the substrate 210 toward a direction away from the substrate 210. Accordingly, the first layer 221 and the second layer 222 may form a step when viewed in a cross-section parallel to the first direction (X). In this case, the step may be formed at at least one end portion of the coating layer 220.

For example, the step includes a first step formed at a coating start point in a direction in which the coating layer 220 is coated.

In an embodiment, for example, the second layer 222 is formed after the first layer 221 is coated. In this case, the second layer 222 starts to be formed at a certain distance from the point where the first layer 221 starts to be coated. The second layer 222 may have a different coating start point from the first layer 221 when coated on the first layer 221 when viewed from above. Accordingly, the second layer 222 forms a first step with the first layer 221.

As described with respect to FIG. 6, the coating layer 220 may be formed with a rising portion on the side where the coating starts. For example, the first layer 221 is formed with a rising portion 221t. For example, the second layer 222 is formed with a rising portion 222t.

In an embodiment, the second layer 222 has a different coating start point from the first layer 221. Accordingly, the rising portion 222t of the second layer may be formed on the first layer 221 without overlapping the rising portions 221t of the first layer.

For example, as shown in FIG. 7, the rising portion 221t of the first layer may be formed on a line "A" perpendicular to the first direction (X) (or a plane "A" perpendicular to the first direction (X)). In this case, the line "A" is a line drawn perpendicular to the first direction (X) from the top of the rising portion 221t of the first layer.

For example, as shown in FIG. 7, the rising portion 222t of the second layer may be formed on a line "B" perpendicular to the first direction (X) (or a plane "B" perpendicular to the first direction (X)). In this case, the line "B" is a line drawn perpendicular to the first direction (X) from the top of the rising portion 222t of the second layer.

In this case, the lines "A" and "B" may be formed with an interval as wide as a width of the first step. In this case, the width of the first step is a shortest interval between the coating start points of the first layer 221 and the second layer 222 in the first direction (X), when viewed from above. In an embodiment, the width of the first step is generally set according to a section where the slurry is excessively discharged when the slurry is coated on the substrate 210. In an embodiment, for example, the first step may be formed with a width of 2 µm to 4 µm in the first direction (X).

Accordingly, the lines "A" and "B" may be spaced apart by a width W1 of the first step. That is, the rising portion 221t of the first layer 221 and the rising portion 222t of the second layer 222 may be formed without overlapping each other. For example, the top of the rising portion 221t of the first layer 221 and the top of the rising portion 222t of the second layer 222 may be formed without overlapping each other when viewed from above.

Accordingly, a height h2 of the coating layer 220 may be formed lower than the height h1 of the coating layer 220 described in FIG. 6 because the tops of the rising portions of the plurality of layers (for example, including 221 and 222) are formed without overlapping each other.

Thus, the electrode 200 according to an embodiment of the present disclosure may avoid rising portions from excessively occurring on the electrode 200 through a plurality of layers (for example, including 221 and 222) forming a step. For example, the electrode 200 may avoid overlapping rising portions of coating layers 220 by forming a step at an end portion corresponding to the coating start point of the coating layer 220.

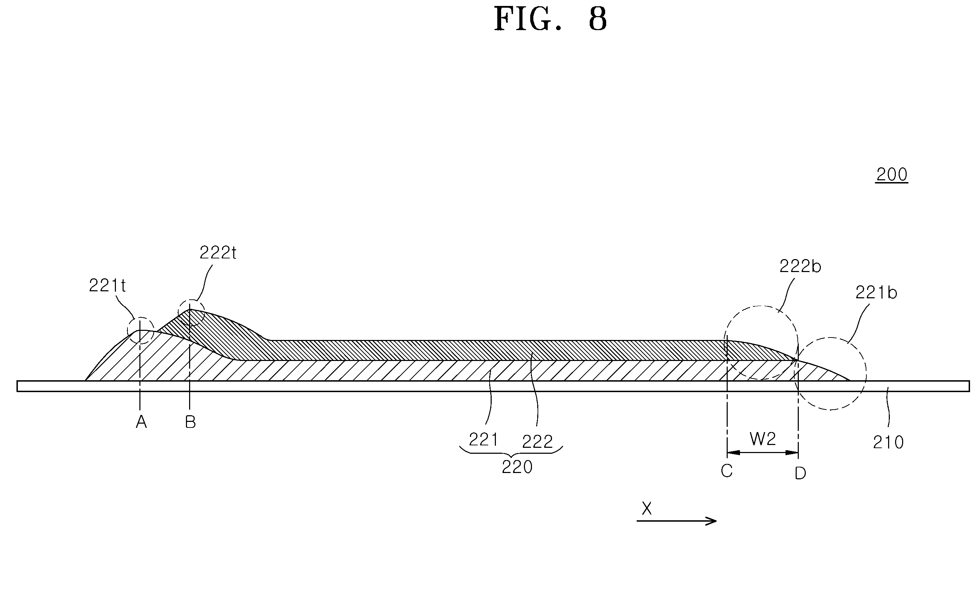

FIG. 8 is a view schematically showing an electrode according to an embodiment of the present disclosure.

In FIG. 8, 200 represents an electrode according to an embodiment of the present disclosure.

The electrode 200 includes a substrate 210 and a coating layer 220 formed on at least one side of the substrate 210, and the coating layer 220 includes a first layer 221 and a second layer 222 located on the first layer 221 and forming, or defining, a step with the first layer 221.

As described with respect to FIG. 7, the step may include a first step which is an end portion corresponding to a coating start point of the coating layer 220. In an embodiment, the step which the coating layer 220 may include is not limited to the coating start point. In an embodiment, for example, the step includes a second step formed at a coating termination point in a direction in which the coating layer 220 is coated.

The coating layer 220 may be formed with a descending portion formed at a side where coating is terminated. The descending portion may be generated, for example, as an amount of slurry discharged from a discharge port 1120 is reduced to terminate coating. Accordingly, for example, the first layer 221 is formed with a descending portion 221b. For example, the second layer 222 is formed with a descending portion 222b.

In this case, when viewed from above, the second layer 222 may have a different coating termination point from the first layer 221. Accordingly, the descending portion 222b of the second layer 222 may be formed on the first layer 221 without overlapping the descending portion 221b of the first layer 221.

For example, as shown in FIG. 8, the descending portion 221b of the first layer may be formed on a line "C" perpendicular to the first direction (X) (or a plane "C" perpendicular to the first direction (X)). In this case, the line "C" is a line drawn perpendicular to the first direction (X) from a starting point of the descending portion 221b of the first layer 221.

For example, as shown in FIG. 8, the descending portion 222b of the second layer may be formed on a line "D" perpendicular to the first direction (X) (or a plane "D" perpendicular to the first direction (X)). In this case, the line "D" is a line drawn perpendicular to the first direction (X) from a starting point of the descending portion 222b of the second layer 222.

In this case, the lines "C" and "D" may be formed with an interval as wide as a width W2 of the second step. In this case, the width of the second step is a shortest interval between the coating termination points of the first layer 221 and the second layer 222 in the first direction (X) when viewed from above. The width W2 of the second step is generally set according to a section where the slurry is excessively discharged when the slurry is coated on the substrate 210.

Accordingly, the lines "C" and "D" may be spaced apart by the width W2 of the second step. Accordingly, the descending portion 221b of the first layer 221 and the descending portion 222b of the second layer 222 may be formed without overlapping each other. For example, the top of the descending portion 221b of the first layer 221 and the top of the descending portion 222b of the second layer 222 may be formed without overlapping each other when viewed from above.

In an embodiment, at the coating termination point, the first layer 221 is formed with a first inclination, and the second layer 222 is formed with a second inclination. The first inclination and the second inclination may be formed with the same or different inclination angles. The first inclination and the second inclination may be formed in the first layer 221 and/or the second layer 222 due to the descending portion.

In an embodiment, as shown in FIG. 8, the second step may be formed as the first inclination and the second inclination are continuously connected. That is, the second step may be formed with a width as wide as the section where the descending portion of the first layer 221 occurs. Thus, as the first layer 221 and the second layer 222 are formed with a minimum or reduced second step, a high-capacity effect which may be acquired from the electrode 200 formed as a thick film may be maximized or increased.

In an embodiment, unlike as shown in FIG. 8, the second step may be formed as the first inclination and the second inclination are discontinuously connected. That is, the second step may be formed with a width greater than a section where a descending portion of the first layer 221 occurs. Accordingly, the first layer 221 and the second layer 222 may be prevented or substantially prevented from stably overlapping and descending.

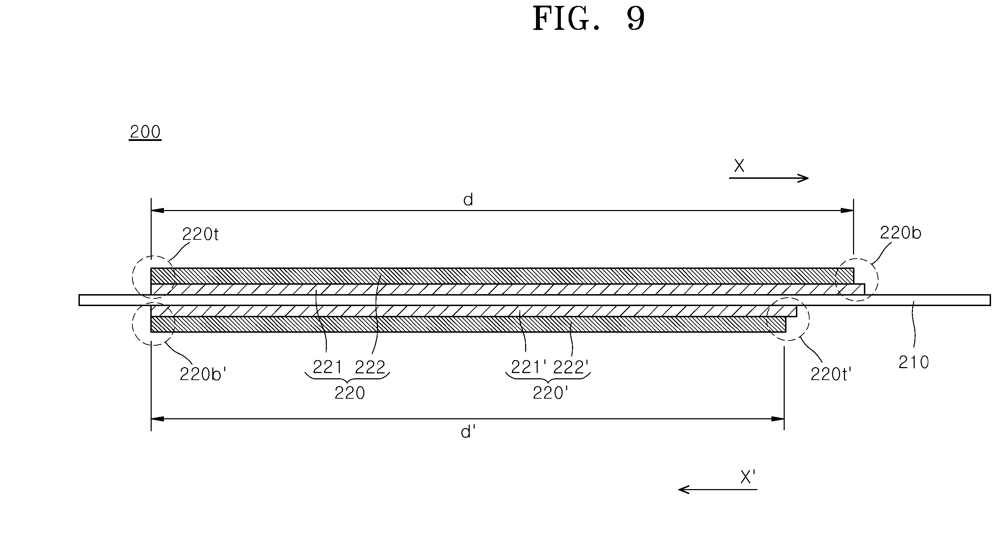

FIG. 9 is a view schematically showing an electrode according to an embodiment of the present disclosure.

In FIG. 9, 200 represents an electrode according to an embodiment of the present disclosure. In FIGS. 7 and 8, examples in which the coating layer is formed on one side of the substrate 210 were described. In FIG. 9, an example in which a coating layer is formed on both, or opposite, sides of the substrate 210 will be described. For convenience of description, in FIG. 9, 220 is shown as representing a first coating layer.

The electrode 200 includes a substrate 210, and a coating layer including a first coating layer 220 coated on one side of the substrate 210 in the first direction (X), and a second coating layer 220' coated on another side of the substrate 210 in a second direction (X'), and the coating layer includes a first layer 221 and a second layer 222 located on the first layer 221 and forming, or defining, a step with the first layer 221.

The coating layer includes the first coating layer 220 coated on one side of the substrate 210. In this case, the first coating layer 220 is coated on the substrate 210 along the first direction (X). In this case, the first direction (X) is, for example, parallel to a longitudinal direction of the substrate 210.

The coating layer may further include the second coating layer 220' coated on the another side of the substrate 210. In this case, the second coating layer 220' is coated on the substrate 210 along the second direction (X'). In this case, the second direction (X') is, for example, a direction opposite to the first direction (X). That is, the second direction (X') may be parallel to the longitudinal direction of the substrate 210 and may be the direction opposite to the first direction (X).

The coating layer includes two coating layers (for example, including 220 and 220') coated on both, or opposite, sides of the substrate 210 in different directions.

A coating start point of the first coating layer 220 may face a coating termination point of the second coating layer 220' with the substrate 210 interposed therebetween. For example, a rising portion 220t of the first coating layer may face a descending portion 220b' of the second coating layer with the substrate 210 interposed therebetween.

Further, a coating termination point of the first coating layer 220 may face a coating start point of the second coating layer 220' with the substrate 210 interposed therebetween. For example, a descending portion 220b of the first coating layer may face a rising portion 220t' of the second coating layer with the substrate 210 interposed therebetween.

In an embodiment, the description of the rising portions 220t and 220t' and descending portions 220b and 220b' of each of the first coating layer and the second coating layer is the same as or similar to the description of the rising portions and/or descending portions described in FIGS. 7 to 8.

For example, if the first direction and the second direction are formed the same (e.g., identically), the rising portion 220t of the first coating layer and the rising portion 220t' of the second coating layer may be located on one side of the substrate 210 with the substrate 210 interposed therebetween. In this case, the one side of the substrate 210 may become excessively thick. For example, if the first direction and the second direction are formed the same (e.g., identically), the descending portion 220b of the first coating layer and the descending portion 220b' of the second coating layer may be located on the one side of the substrate 210 with the substrate 210 interposed therebetween. In this case, the another side of the substrate 210 may become excessively thin. Accordingly, the electrode 200 may be formed unevenly, and charging/discharging efficiency may be lowered.

On the other hand, the first direction (X) and the second direction (X') of the electrode 200 according to an embodiment of the present disclosure are oppositely disposed to avoid the above-described problems and allow the electrode 200 to be evenly formed.

In an embodiment, for example, in the first direction (X) (or, in the second direction (X')), the first coating layer 220 is formed longer than the second coating layer 220'. For example, the first coating layer 220 is formed with a first length d, and the second coating layer 220' is formed with a second length d' shorter than the first length d.

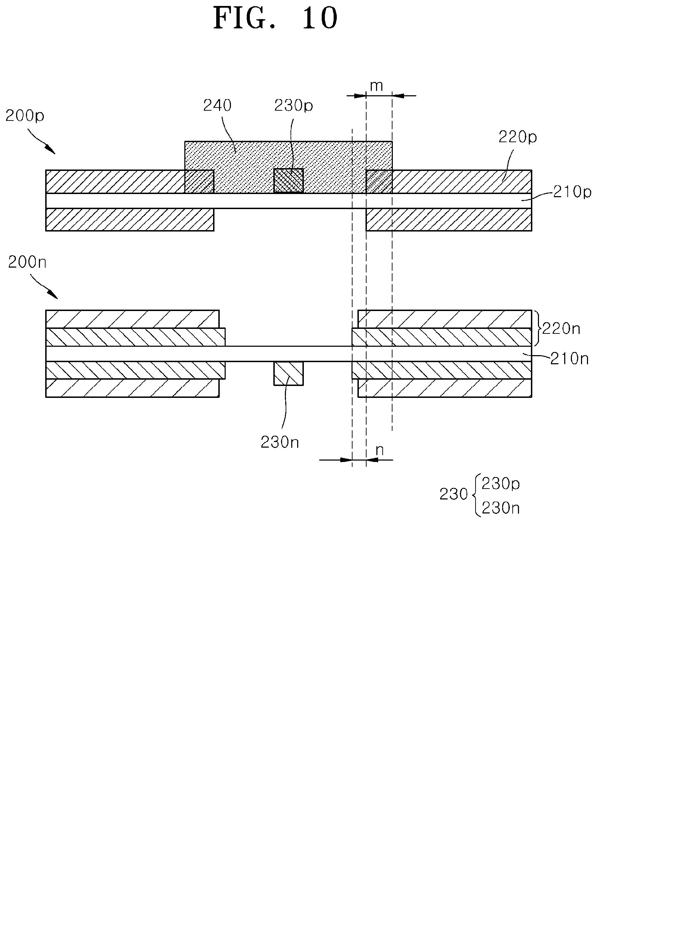

FIG. 10 is a view schematically showing a first electrode and a second electrode according to an embodiment of the present disclosure.

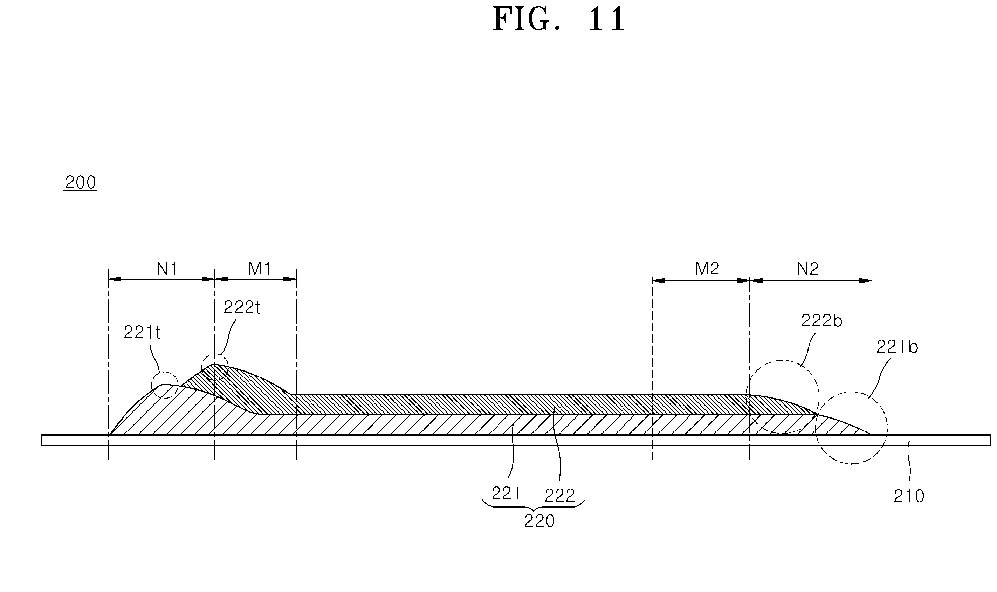

FIG. 11 is a view schematically showing the electrode according to one embodiment of the present disclosure shown according to FIG. 10.

A secondary battery 100 according to an embodiment of the present disclosure includes an electrode 200. The electrodes 200 may include, for example, a first electrode 200p and a second electrode 200n. In an embodiment, the first electrode 200p includes, for example, the positive electrode 10 described with respect to FIGS. 1 to 4, and the second electrode 200n includes, for example, the negative electrode 20 described with respect to FIGS. 1 to 4. In another embodiment, the first electrode 200p includes, for example, the negative electrode 20 described with respect to FIGS. 1 to 4, and the second electrode 200n includes, for example, the positive electrode 10 described with respect to FIGS. 1 to 4.

The electrode 200 according to an embodiment of the present disclosure may include a tab 230 and a protective layer 240. As described above, the electrode 200 includes a substrate 210 and a coating layer 220 coated on the substrate 210. For example, the first electrode 200p includes a substrate 210p and a coating layer 220p coated on the substrate 210p. For example, the second electrode 200n includes a substrate 210n and a coating layer 220n coated on the substrate 210n.

In this case, a region where the coating layer 220 is coated on the substrate 210 may be referred to as "a coated portion." Further, a region where the coating layer 220 is not coated on the substrate 210 and the substrate 210 is exposed to the outside may be referred to as "an uncoated portion."

The tab 230 may be located on the uncoated portion. The tab 230 may be joined to the substrate 210 and extend outward from the substrate 210. For example, in the tab 230, one side is joined to the substrate 210, and another side extends to the outside of the substrate 210. The tab 230 is, for example, joined to the uncoated portion. In an embodiment, for example, the tab 300 may be fixed to the substrate 210 by welding one side to the uncoated portion.

For example, the first tab 230p may be located on the uncoated portion of the first electrode 200p. The first tab 230p may be formed such that one side is joined to the substrate 210p of the first electrode, and another side extends to the outside of the substrate 210p.

Further, for example, the second tab 230n may be located on the uncoated portion of the second electrode 200n.

The tab 230 allows the electrode 200 to be electrically connected to the outside. Accordingly, the tab 230 may function as an electron movement path through which electrons are introduced into the electrode 200 or electrons are discharged from an electrode plate.

For example, if the secondary battery 100 is formed in a cylindrical shape, the tab 230 may be connected to a current collector plate. For example, if the electrode 200 is a positive electrode, the tab 230 may be connected to a positive electrode current collector plate. For example, if the electrode 200 is a negative electrode, the tab 230 may be connected to a negative electrode current collector plate. For example, if the secondary battery 100 is formed in a pouch shape, the tab 230 may be electrically connected to a lead tab.

The electrode 200 may repeat an activity of swelling or subsiding as charging/discharging are repeated. In this case, the tab 230 may contact the electrode adjacent to the tab 230. For example, the tab 230 may apply pressure to the substrate 210 to which the tab 230 is attached and/or the electrode adjacent to the tab 230. Accordingly, the tab 230 may cause a short circuit. For example, the tab 230 may cause cracks in the substrate 210. In this case, the resistance of the secondary battery 100 increases, resulting in a problem that charging/discharging efficiency is lowered, and/or the stability of the secondary battery 100 is lowered.

To avoid this problem, the electrode 200 according to an embodiment of the present disclosure may further include a protective layer 240.

The protective layer 240 is provided on the substrate 210 while covering the tab 230. The protective layer 240 is, for example, attached to the substrate 210 while covering the tab 230. That is, the protective layer 240 may be attached to the uncoated portion. The protective layer 240 may be provided not only on the substrate 210 while covering the tab 230, but also on the coating layer 220 by extending from the substrate 210. That is, the protective layer 240 may be attached to the uncoated portion and the coated portion adjacent to the uncoated portion. In FIG. 10, for convenience of description, the protective layer 240 is shown only for the first electrode 200p. Herein, the protective layer 240 included in the first electrode 200p will be described as an example. However, the second electrode 200n may also include a protective layer which covers the tab 230n, and a description of the protective layer included in the second electrode 200n may be the same as or similar to the description of the protective layer 240 included in the first electrode 200p.

For example, the first electrode 200p includes the protective layer 240. The protective layer 240 is provided on at least a portion of the substrate 210p of the first electrode and the coating layer 220p of the first electrode while covering the first tab 230p.

In an embodiment, as shown in FIG. 10, the first electrode 200p and the second electrode 200n are formed by being stacked with a separator (not shown in FIG. 10) interposed therebetween.

In this case, the protective layer 240 may be located on a portion of the coating layer 220n of the second electrode 200n in the stacking direction. For example, the protective layer 240 may be located on a portion of the second layer of the second electrode 200n.

In an embodiment, the protective layer 240 may be located on a starting point of the coating layer 220n of the second electrode 200n and/or a coating termination point of the coating layer 220n. Accordingly, the protective layer 240 may prevent or substantially prevent the starting point of the coating layer 220n of the second electrode 200n and/or the coating termination point of the coating layer 220n from facing the first electrode 200p.

In this case, a portion of the second layer of the second electrode 200n may be formed flat on the substrate 210n of the second electrode 200n. That is, the protective layer 240 may prevent or substantially prevent a rising and/or descending section in the coating layer 220n of the second electrode 200n from facing the first electrode 200p. The protective layer 240 may allow a flat section of the coating layer 220n of the second electrode 200n without a rising and/or descending section to face the first electrode 200p.

Accordingly, the protective layer 240 may be attached to the first electrode 200p based on the coating layer 220n of the second electrode 200n. FIG. 11 is a view of the second electrode 200n shown to describe a position to which the protective layer 240 is attached.

In FIG. 11, N1 is a region where the coating layer of the first electrode 200p is not located in the stacking direction, and represents a region where the rising portion of the coating layer 220n of the second electrode 200n is partially formed. N2 is a region where the coating layer of the first electrode 200p is not located in the stacking direction, and represents a region where the descending portion of the coating layer 220n of the second electrode 200n is partially formed. N1 and N2 may correspond to, for example, "n" in FIG. 10.

In this case, in FIG. 10, "n" is a portion of the uncoated portion of the first electrode 200p, and "n" is a region where the coating layer 220p is not formed on the substrate 210p in the first electrode 200p. Further, "n" is a portion of the coated portion of the second electrode 200n, and "n" is a region where the coating layer 220n is formed on the substrate 210n in the second electrode 200n.

Accordingly, the protective layer 240 is formed on a region corresponding to n, N1, and N2. However, an end portion of the protective layer 240 is not formed on the region corresponding to n, N1, and N2.

In FIG. 11, M1 is a region where the coating layer of the first electrode 200p is located in the stacking direction, and represents a region where the rising portion of the coating layer 220n of the second electrode 200n is partially formed. M2 is a region where the coating layer of the first electrode 200p is located in the stacking direction, and represents a region where the descending portion of the coating layer 220n of the second electrode 200n is partially formed. Further, M1 and M2 represent regions including a point where the rising and/or the descending ends. M1 and M2 may correspond to, for example, "m" in FIG. 10.

In this case, in FIG. 10, "m" is a portion of the coated portion of the first electrode 200p, and "m" is a region where the coating layer 220p is formed on the substrate 210p in the first electrode 200p. Further, "m" is a portion of the coated portion of the second electrode 200n, and "m" is a region where the coating layer 220n is formed on the substrate 210n in the second electrode 200n.

Accordingly, the protective layer 240 is formed on a region corresponding to m, M1, and M2. An end portion of the protective layer 240 is formed on the region corresponding to m, M1, and M2.

Through this structure, the protective layer 240 may prevent or substantially prevent the rising portion and/or the descending portion of the second electrode 200n from facing the first electrode 200p.

In an embodiment, the protective layer 240 may include, for example, an adhesive material. The adhesive material may be at least one selected from the group consisting of, for example, an acrylic-based adhesive, a rubber-based adhesive, a silicon-based adhesive, a hot melt adhesive, and a combination thereof. The protective layer 240 may be attached to the first electrode 200p through the adhesive material.

According to one or more embodiments of the present disclosure, a high-capacity electrode and/or secondary battery are provided.

According to one or more embodiments of the present disclosure, an electrode and/or a secondary battery which can be quickly charged are provided.

However, aspects and technical effects acquirable through the present disclosure are not limited to the above-described aspects and technical effects, and other aspects and technical effects which are not mentioned will be clearly understood by those skilled in the art from the description of the invention.

Although the present disclosure has been described above by some embodiments and drawings, the present disclosure is not limited thereto.

## Claims

1. An electrode (200) comprising:
a substrate (210); and
a coating layer (220) comprising a first coating layer (220) coated on a side of the substrate (210) in a first direction, and a second coating layer (220') coated on another side of the substrate (210) in a second direction,
wherein the coating layer (220) comprises:
a first layer (221); and
a second layer (222) located on the first layer (221) and defining a step with the first layer (221).

2. The electrode (200) as claimed in claim 1, wherein the second direction is a direction opposite to the first direction.

3. The electrode (200) as claimed in claim 1 or 2, wherein, in the first direction, the first coating layer (220) is longer than the second coating layer (220').

4. The electrode (200) as claimed in any one of the preceding claims, wherein, in the first direction, the first layer (221) is longer than the second layer (222).

5. The electrode (200) as claimed in any one of the preceding claims, wherein the step comprises a first step at a coating start point in a direction in which the coating layer (220) is coated.

6. The electrode (200) as claimed in claim 5, wherein the first step has a width of 2 µm to 4 µm in the direction in which the coating layer (220) is coated.

7. The electrode (200) as claimed in any one of the preceding claims, wherein the step comprises a second step at a coating termination point in a direction in which the coating layer (220) is coated.

8. The electrode (200) as claimed in claim 7, wherein, at the coating termination point
the first layer (221) has a first inclination, and
the second layer (222) has a second inclination.

9. The electrode (200) as claimed in claim 8, wherein the second step is formed while the first inclination and the second inclination are continuously connected.

10. The electrode (200) as claimed in claim 8, wherein the second step is formed while the first inclination and the second inclination are discontinuously connected.

11. A secondary battery (100) comprising:
an electrode assembly (40) comprising stacked electrodes (200) and a separator (30); and
a case (50) accommodating the electrode assembly (40),
wherein an electrode (200) of the electrodes (200) comprises:
a substrate (210); and
a coating layer (220) comprising a first coating layer (220) coated on a side of the substrate (210) in a first direction and a second coating layer (220') coated on another side of the substrate (210) in a second direction, and
the coating layer (220) comprises:
a first layer (221); and
a second layer (222) located on the first layer (221) and defining a step with the first layer (221).

12. The secondary battery (100) as claimed in claim 11, wherein the step comprises a first step at a coating start point in a direction in which the coating layer (220) is coated.

13. The secondary battery (100) as claimed in claim 11 or 12, wherein
the step comprises a second step at a coating termination point in a direction in which the coating layer (220) is coated, and
at the coating termination point, the first layer (221) has a first inclination and the second layer (222) has a second inclination.

14. The secondary battery (100) as claimed in any one of the claims 11 to 13, wherein
the electrodes (200) comprise a first electrode (200p) including a first tab (230p) and a protective layer (240), and a second electrode (200n) comprising a second tab (230n),
in the first tab (230p), a side is joined to a substrate (210) of the first electrode (200p) and another side extends outward, and
the protective layer (240) is located on at least a portion of the substrate (210) of the first electrode (200p) and the coating layer (220) of the first electrode (200p) while covering the first tab (230p).

15. The secondary battery (100) as claimed in claim 14, wherein
the first electrode (200p) and the second electrode (200n) are stacked with the separator therebetween, and
in a stacking direction, the protective layer (240) is located on a portion of the second layer (222) of the second electrode (200n).
